# EUROPÄISCHE PATENTSCHRIFT

(11) **EP 3 938 268 B1**
(45) Veröffentlichungstag und Bekanntmachung des Hinweises auf die Patenterteilung: **21.02.2024**
(21) Anmeldenummer: 20711551.0
(22) Anmeldetag: 11.03.2020
(51) Int. Cl.: B62D 1/19

(54) **VERSTELLANTRIEB FÜR EINE LENKSÄULE UND LENKSÄULE FÜR EIN KRAFTFAHRZEUG**
ADJUSTMENT DRIVE FOR A STEERING COLUMN, AND STEERING COLUMN FOR A MOTOR VEHICLE
ENTRAÎNEMENT DE RÉGLAGE POUR UNE COLONNE DE DIRECTION ET COLONNE DE DIRECTION POUR UN VÉHICULE AUTOMOBILE

(30) Priorität: 12.03.2019 DE 102019203363
(43) Veröffentlichungstag der Anmeldung: 19.01.2022
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH); BAYER, Tim, 9450 Lüchingen (CH)
(74) Vertreter: thyssenkrupp Intellectual Property GmbH
(86) Internationale Anmeldenummer: PCT/EP2020/056475
(87) Internationale Veröffentlichungsnummer: WO 2020/182868

(56) Entgegenhaltungen:
- WO-A1-2018/138044
- JP-A- 2007 008 266

## Beschreibung

### Stand der Technik

Die Erfindung betrifft einen Verstellantrieb für eine Lenksäule für ein Kraftfahrzeug, umfassend ein Gehäuse welches mit der Lenksäule verbindbar ist, in dem ein von einem Motor drehend antreibbares Getrieberad in einer Lageranordnung um eine Spindelachse drehbar gelagert ist, an dem eine in eine Spindelmutter eingreifende Gewindespindel axial in Richtung der Spindelachse abgestützt ist. Eine Lenksäule mit einem derartigen Verstellantrieb ist ebenfalls Gegenstand der Erfindung.

Eine Lenksäule für ein Kraftfahrzeug weist eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist in einer Manteleinheit drehbar gelagert, mit der sie zusammen eine Stelleinheit bildet. Die Manteleinheit wird von einer an der Fahrzeugkarosserie befestigten Trageinheit gehalten. Verstellbare Lenksäulen ermöglichen durch eine Verstellung der Manteleinheit relativ zur Trageinheit die Einstellung der Lenkradposition relativ zur Fahrzeugkarosserie. Zur Längsverstellung ist es bekannt, die Lenksäule in Längsrichtung, d.h. in Richtung der Längsachse, verstellbar zu gestalten, um den Abstand zur Fahrerposition einzustellen. Zur Höhenverstellung kann die Lenkspindel quer zur Längsachse verstellt werden, um die Höhenposition des Lenkrads einzustellen.

Es ist im Stand der Technik bekannt, zur Verstellung der Stelleinheit relativ zur Trageinheit einen motorischen Verstellantrieb mit einer Antriebseinheit vorzusehen, die einen elektrischen Motor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Spindel (Gewindespindelachse), drehend antreibbar, wodurch die Gewindespindel und die Spindelmutterje nach Drehrichtung translatorisch aufeinander zu oder voneinander weg bewegt werden können. In einer Ausführungsform ist die Gewindespindel von der Antriebseinheit, die ein feststehend mit einem ersten Lenksäulenbauteil, beispielsweise der Stelleinheit oder der Trageinheit, verbundenes Gehäuse hat, um ihre Gewindespindelachse drehend antreibbar und greift in die Spindelmutter ein, die an einem relativ zum ersten Lenksäulenbauteil verstellbaren zweiten Lenksäulenbauteil, beispielsweise an der Trageinheit oder alternativ an der Stelleinheit, bezüglich Drehung um die Gewindespindelachse feststehend angebracht ist. In Richtung der Spindelachse stützt sich die Gewindespindel an dem ersten Lenksäulenbauteil ab, und die Spindelmutter an dem zweiten Lenksäulenbauteil, so dass ein rotatorischer Antrieb der Gewindespindel eine translatorische Verstellung der beiden Lenksäulenbauteile relativ zueinander in Richtung der Spindelachse bewirkt. Diese Ausführung wird als Rotationsspindelantrieb bezeichnet.

In einer alternativen Ausführungsform ist die Gewindespindel bezüglich Drehung um ihre Spindelachse unverdrehbar mit dem zweiten Lenksäulenbauteil gekoppelt und die Spindelmutter ist drehend antreibbar, aber axial, in Richtung der Spindelachse feststehend an dem ersten Lenksäulenbauteil gelagert und von dem Motor drehend antreibbar. Wie in der ersten Ausführungsform stützt sich die Gewindespindel axial an dem einen Lenksäulenbauteil ab, und die Spindelmutter entsprechend an dem anderen Lenksäulenbauteil, so dass die Lenksäulenbauteile translatorisch relativ zueinander verschiebbar sind, indem die Spindelmutter von der Antriebseinheit drehend angetrieben wird. Diese Ausführung wird als Tauchspindelantrieb bezeichnet.

Zur Realisierung einer Längsverstellung der Stelleinheit in Richtung der Längsachse der Lenkspindel kann der Spindeltrieb zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Spindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Der Antrieb des Spindeltriebs erfolgt von der Antriebseinheit über ein um seine Achse, die identisch mit der Spindelachse ist, drehend antreibbares Getrieberad, welches je nach Ausführung des Spindeltriebs mit der Spindelmutter oder mit der Gewindespindel drehfest verbunden ist. Das Getrieberad ist in dem Gehäuse drehbar und axial abgestützt gelagert und kann einen Verzahnungsabschnitt in Form eines Stirnrads aufweisen, mit einer außen umlaufenden Verzahnung oder Schneckenverzahnung, in die ein mit dem Motor verbundenes Antriebsrad, beispielsweise eine Schnecke, eingreift. Das Getrieberad ist in dem Gehäuse in einer Lageranordnung gelagert, wodurch die auf das Getrieberad in beiden axialen Richtungen de Spindelachse auf den Spindeltrieb wirkenden Halte- und Verstellkräfte über das Getrieberad auf das Gehäuse übertragen, und von dort an der Stelleinheit, der Manteleinheit oder der Trageinheit abgestützt werden.

Als wirksame Maßnahme zur Verbesserung der Insassensicherheit bei einem Fahrzeugzusammenstoß, dem sogenannten Crashfall, bei dem der Fahrer mit hoher Geschwindigkeit auf das Lenkrad aufprallt, ist es bekannt, die Lenksäule in Längsrichtung zusammenschiebbar zu gestalten, wenn eine Kraft auf das Lenkrad ausgeübt wird, die einen nur im Crashfall auftretenden Grenzwert überschreitet. Um für eine kontrollierte Abbremsung des auf das Lenkrad auftreffenden Körpers zu sorgen, ist zwischen den relativ zueinander verstellbaren Lenksäulenbauteilen, beispielsweise dem Außenmantel und der Stelleinheit, die im Normalbetrieb in der eingestellten Verstellposition relativ zueinander positioniert sind, eine Energieabsorptionseinrichtung eingekoppelt, auch Crasheinrichtung genannt. Diese setzt die über das Lenkrad in die Stelleinheit in Längsrichtung eingeleitete kinetische Energie in plastische Verformung eines Energieabsorptionselements um, beispielsweise durch Aufreißen einer Reißlasche oder Verbiegen eines langgestreckten Biegeelements, etwa eines Biegedrahts oder Biegestreifens.

Aus der DE102018204735A1 ist eine Lenksäule bekannt, bei der eine Energieabsorptionseinrichtung zwischen dem Spindeltrieb und den relativ zueinander verstellbaren Lenksäulenbauteilen angeordnet ist, die im Crashfall bei einer Bewegung des Spindeltriebs in Richtung der Spindelachse kinetische Energie absorbieren kann. Die Energieabsorptionseinrichtung ist dabei zwischen dem Gehäuse oder der Gewindespindel und einem der Lenksäulenbauteile eingegliedert. Diese Anordnung ist effektiv, erfordert jedoch einen relativ hohen Fertigungs- und Montageaufwand.

Aus der WO 2018/138044 A1 ist es bekannt, die Gewindespindelt axial feststehend an dem Gehäuse abzustützen. In der JP 2007 008266 A wird vorgeschlagen, die Gewindespindel axial losbrechbar an dem Gehäuse anzubringen. Ein kontrollierte Energieabsorption ist mit diesen Anordnungen jedoch nicht möglich.

Angesichts der vorangehend erläuterten Problematik ist es eine Aufgabe der vorliegenden Erfindung, einen verbesserten Verstellantrieb zur Verfügung zu stellen, der einen geringeren Fertigungs- und Montageaufwand ermöglicht.

### Darstellung der Erfindung

Diese Aufgabe wird erfindungsgemäß gelöst durch einen Verstellantrieb mit den Merkmalen des Anspruchs 1 und eine Lenksäule mit einem derartigen Verstellantrieb gemäß Anspruch 18. Vorteilhafte Weiterbildungen ergeben sich aus den Unteransprüchen.

Bei einem Verstellantrieb für eine Lenksäule für ein Kraftfahrzeug, umfassend ein Gehäuse (Antriebsgehäuse) welches mit der Lenksäule verbindbar ist, in dem ein von einem Motor drehend antreibbares Getrieberad in einer Lageranordnung um eine Spindelachse drehbar gelagert ist, an dem eine in eine Spindelmutter eingreifende Gewindespindel axial in Richtung der Spindelachse abgestützt ist, wobei das Gehäuse ein Verbindungselement aufweist, wird erfindungsgemäß vorgeschlagen, dass zwischen der Gewindespindel und dem Gehäuse eine Energieabsorptionseinrichtung angeordnet ist, welche ausgebildet ist zur Absorption von kinetischer Energie bei einer relativen Verlagerung der Gewindespindel zum Gehäuse in Richtung der Spindelachse.

Bevorzugt weist das Gehäuse ein Verbindungselement auf, welches derart ausgebildet ist um das Gehäuse in Richtung der Spindelachse abgestützt mit einem ersten Lenksäulenbauteil einer Lenksäule zu verbinden. Weiters kann die Gewindespindel ist in Richtung der Spindelachse abgestützt mit einem zweiten Lenksäulenbauteil verbindbar ist, welches relativ zum ersten Lenksäulenbauteil in Richtung der Spindelachse verstellbar ist.

Der Verstellantrieb weist ein Gehäuse auf, welches als Antriebsgehäuse ausgebildet ist, in dem das Getrieberad gelagert ist, und an dem bevorzugt der Motor zur Bildung einer kompakten Antriebseinheit fest angebracht ist. Das Gehäuse kann mittels des Verbindungselements an einem der relativ zueinander verstellbaren Lenksäulenbauteile axial, d.h. in Richtung der Spindelachse, abgestützt festgelegt sein. Die Energieabsorptionseinrichtung sorgt im Crashfall für eine kontrollierte Abbremsung einer Relativbewegung zwischen Gewindespindel und Gehäuse in Richtung der Spindelachse durch Umwandlung kinetischer Energie in Reibungswärme und Verformungsarbeit. Dadurch, dass erfindungsgemäß die Energieabsorptionseinrichtung in das Gehäuse integriert ist, können die Verstellfunktion und zusätzlich die Energieabsorptionsfunktion in einer kompakten Antriebseinheit des Verstellantriebs raumsparend zusammengefasst werden.

Gegenüber dem Stand der Technik, der die separate Bereitstellung und Montage der Energieabsorptionseinrichtung zwischen dem Verstellantrieb und einem Lenksäulenbauteil erfordert, kann der erfindungsgemäße Verstellantrieb mit geringerem Aufwand an der Lenksäule montiert werden. Dabei kann eine vorteilhafte Ausgestaltung mit einem geringeren Bauraumbedarf realisiert werden.

Das Getrieberad kann drehfest mit der Spindelmutter verbunden sein, zur Bildung eines Tauchspindeltriebs, wobei das Getrieberad die Spindelmutter aufweist oder fest damit verbunden ist. Alternativ kann das Getrieberad drehfest mit der Gewindespindel verbunden sein, zur Bildung eines Rotationsspindeltriebs.

Die Gewindespindel ist bevorzugt aus einem metallischen Werkstoff gebildet und aus einem Vollmaterial d.h. aus einem massiven Material gebildet, so dass ein besonders stabile Gewindespindel bereitgestellt werden, die sich während des Crashfalls nicht verformt, also während dem Crash unverformt bleibt.

Die Energieabsorptionseinrichtung kann ein Energieabsorptionselement aufweisen, welches ein Friktionselement (Reibelement) und/oder ein Deformationselement aufweist. Das Energieabsorptionselement kann bevorzugt in dem Gehäuse im Kraftfluss zwischen dem Gehäuse und der Gewindespindel angeordnet sein, so dass es bei einer axialen Bewegung der Gewindespindel relativ zum Gehäuse plastisch deformiert wird und alternativ oder zusätzlich kinetische Energie in Reibungswärme umwandelt. Dabei ist vorteilhaft, dass das Energieabsorptionselement in dem Gehäuse des Verstellantriebs gegen potentiell schädliche äußere Einflüsse geschützt ist, wodurch die Funktionssicherheit und damit der Insassenschutz erhöht werden. Dabei ist die Montage gegenüber dem Stand der Technik vereinfacht.

Eine vorteilhafte Ausführung sieht vor, dass die Energieabsorptionseinrichtung mit der Lageranordnung und dem Gehäuse zusammenwirkt. Die Lageranordnung überträgt im Normalbetrieb die Verstellkraft zwischen der Gewindespindel und dem Gehäuse, und entsprechend wirkt im Crashfall die dabei von der Gewindespindel über das Getrieberad in die Lageranordnung eingeleitete Crashkraft in axialer Richtung zwischen der Lageranordnung und dem Gehäuse. Ein Energieabsorptionselement der Energieabsorptionseinrichtung kann in dem Gehäuse in Richtung der Spindelachse zwischen der Lageranordnung und dem Gehäuse angeordnet sein. Im Normalbetrieb ist das Getrieberad axial in der Lageranordnung in seiner Betriebsposition gehalten. Im Crashfall gibt die Lageranordnung in axialer Richtung nach und gibt eine Verlagerung des Getrieberads samt der Gewindespindel in Richtung der axial einwirkenden Crashkraft frei, wobei die Energieabsorptionseinrichtung anspricht und das Energieabsorptionselement zwischen der Lageranordnung und dem Gehäuse zur Energieabsorption verformt und/oder unter Reibung bewegt wird. Ein Vorteil dabei ist, dass die Lageranordnung in dem Gehäuse in axialer Richtung geführt sein kann, und die Energieabsorptionseinrichtung optimiert sein kann, die nur im Crashfall bewegte Lageranordnung relativ zum Gehäuse kontrolliert abzubremsen.

Es ist möglich, dass das Gehäuse rohrförmig in Richtung der Spindelachse ausgebildet ist, wobei die Lageranordnung koaxial in dem Gehäuse aufgenommen ist. Der Innenraum des Gehäuses kann sich koaxial zur Spindelachse, axial erstrecken. Die Lageranordnung kann in dem Innenraum angeordnet und im Normalbetrieb axial fixiert sein. Im Crashfall kann die Lageranordnung in Richtung der Crashkraft unter Energieabsorption axial entlang eines vorgegebenen Crashwegs, innerhalb dessen die Energieabsorption durch Reibung und/oder Verformung erfolgen kann, in dem Innenraum bewegt werden. Vorteilhaft dabei ist, dass die Lageranordnung im Crashfall in dem Gehäuse geführt ist, so dass eine kontrollierte Abbremsung gut realisierbar ist. Das oder die Energieabsorptionselemente sind in dem Gehäuse gegen externe Einflüsse geschützt.

Eine vorteilhafte Ausführung der Erfindung ist, dass ein Halteelement zwischen einem Widerlagerelement der Lageranordnung und dem Gehäuse angeordnet ist. Das Haltelement ist in axialer Richtung an dem Gehäuse fixiert und sorgt dafür, dass ein Widerlagerelement der Lageranordnung im Normalbetrieb in Position gehalten wird. Das Widerlagerelement dient zur axialen Abstützung der Lageranordnung und damit des Getrieberads in der Lageranordnung. Die über die Gewindespindel auf das Getrieberad, und davon auf die Lageranordnung übertragenen Kräfte werden über das Halteelement axial gegen das Gehäuse abgestützt. Das Haltelement stellt eine definierte axiale Haltekraft für die Lageranordnung zur Verfügung, die im Normalbetrieb nicht überschritten wird, so dass das Widerlagerelement und somit die Lageranordnung in Betriebsposition bleibt. Im Crashfall, wenn die Haltekraft überschritten wird, wird die Verbindung zwischen dem Halteelement und dem Gehäuse gelöst, und das Widerlagerelement kann sich samt dann nicht mehr gestützten Teilen der Lageranordnung und dem Getrieberad und der damit verbundenen Gewindespindel in Richtung der Crashkraft axial relativ zum Gehäuse bewegen.

Neben der Fixierung der Lageranordnung im Normalbetrieb kann das Haltelement in vorteilhafter Weise zur Energieabsorption ausgebildet sein, wie im Folgenden erläutert wird.

Es ist möglich, dass das Halteelement ein Energieabsorptionselement aufweist. Das Haltelement kann beispielsweise ein Friktionselement aufweisen, welches zur Halterung der Lageranordnung kraftschlüssig mit dem Gehäuse verbunden ist. Beim Überschreiten der dadurch bewirkten Haltekraft durch die im Crashfall höhere Crashkraft bewegt sich das Halteelement relativ zum Gehäuse, und im Reibschluss der Verbindung wird kinetische Energie absorbiert. Das Halteelement kann einen gegen das Gehäuse verspannten Kontaktabschnitt aufweisen, beispielsweise kann ein ringförmiges, koaxial angeordnetes Haltelement einen radial von innen gegen die Innenwandung eines rohrförmigen Innenraums des Gehäuses reibschlüssig verspannten Reibabschnitt aufweisen. Zusätzlich oder alternativ kann der Kontaktabschnitt einen formschlüssig verspannten Formschlussabschnitt aufweisen. Über den oder die Kontaktabschnitte ist das Halteelement axial an dem Gehäuse abgestützt.

Weiterhin kann das Haltelement ein oder mehrere Deformations- oder Umformelemente aufweisen, welche axial zwischen der Lageranordnung und dem Gehäuse angeordnet sind. Bei einer durch die Crashkraft verursachten Relativbewegung erfolgt durch plastische Deformation ebenfalls eine Energieabsorption.

Es kann vorteilhaft sein, dass das Haltelement ein Federelement aufweist, welches elastisch gegen das Gehäuse verspannbar ist. Das Federelement kann beispielsweise eine Federzunge, Blattfeder oder dergleichen aufweisen, mit dem ein Kontaktabschnitt gegen das Gehäuse vorgespannt ist. Durch Reibschluss zwischen dem Kontaktabschnitt und dem Gehäuse kann im Normalbetrieb eine definierte Haltekraft erzeugt werden, und im Crashfall eine definierte Reibkraft bei einer relativen Bewegung. Zusätzlich oder alternativ kann ein Halteelement mit dem Gehäuse federbelastet im Formschluss gehalten werden, der im Crashfall durch die Crashkraft gelöst wird.

Mindestens ein Federelement kann bevorzugt einstückig mit dem Halteelement ausgebildet sein, welches bevorzugt als Draht- oder Blechformteil aus Stahl oder Federstahl ausgebildet sein kann. Ein Reibschluss- und/oder Formschlusselement zur Verbindung mit dem Gehäuse kann ebenfalls bevorzugt einstückig mit dem Halteelement ausgebildet sein, beispielsweise in Form eines Kontaktelements mit einer Profilierung oder einem Haltegrat, der gegen das Gehäuse angepresst wird und dabei durch Reibung und/oder lokale Verformung eine kraft- und/oder formschlüssige Verbindung erzeugen kann.

In einer vorteilhaften Weiterbildung kann es vorgesehen sein, dass das Halteteil bei einer Verlagerung gegenüber dem Gehäuse einen Span von dem Gehäuse abtrennt und somit durch diese Trennoperation Energie absorbiert wird. Alternativ oder zusätzlich kann auch ein Trennelement wie beispielsweise ein Hobel vorgesehen sein, der sich an dem Halteelement derart abstützt, dass dieser im Crashfall sich gegenüber dem Gehäuse verlagert und einen Span von dem Gehäuse abtrennt.

Eine vorteilhafte Weiterbildung der Erfindung kann vorsehen, dass das Widerlagerelement einen mit dem Halteelement zusammenwirkenden Umformstempel aufweist, der mindestens einen Umformabschnitt aufweist.

Das Widerlagerelement ist mit einer Seite axial gegen die Lageranordnung gerichtet, und stützt beispielsweise einen Lagerring, oder kann mit einem Lagerring verbunden oder selbst als Lagerring ausgebildet sein, beispielsweise mit einer Wälzkörperlaufbahn als Lagerring eines Wälzlagers zur Lagerung des Getrieberads ausgebildet sein. Auf seiner der Lageranordnung axial abgewandten Seite ist der Umformstempel gegen das Halteelement gerichtet. Im Crashfall wird von der Gewindespindel auf die Lageranordnung in axialer Richtung die Crashkraft ausgeübt, die der zwischen dem Halteelement und dem Gehäuse wirkenden Haltekraft entgegengegesetzt ist. Dadurch wird das Widerlagerelement mit dem Umformelement des Umformstempels gegen das Haltelement angepresst, wodurch das Haltelement unter Energieabsorption umgeformt werden kann. Der Umformabschnitt kann beispielsweise eine Biegekante aufweisen, um die das Halteelement umgebogen wird.

Das Widerlagerelement ist bevorzugt aus einem metallischen Werkstoff gebildet und weist eine höhere Steifigkeit auf als das Halteelement.

Eine Weiterbildung kann vorsehen, dass das Halteelement einen ersten Umformabschnitt und mindestens einen relativ dazu beabstandeten zweiten Umformabschnitt aufweist, wobei der erste Umformabschnitt und der zweite Umformabschnitt ausgebildet sind, dass das Halteelement nach einer ersten Umformung um den ersten Umformabschnitt in einer zweiten Umformung um den zweiten Umformabschnitt umformbar ist. Der zweite Umformabschnitt kann relativ zum ersten Umformabschnitt bezüglich der Spindelachse radial nach außen versetzt angeordnet sein, und axial auf die Lageranordnung zu, d.h. entsprechend in Richtung der Spindelachse von Haltelement weg angeordnet sein. Bei der ersten Umformung wird das Halteelement am ersten Umformabschnitt umgebogen, bis es in Kontakt mit dem zweiten Umformabschnitt kommt, und dort in einer zweiten Umformung weiter verformt werden kann. Bei der ersten und zweiten Umformung kann jeweils eine plastische und/oder elastische Verformung, beispielsweise eine Umbiegung, erfolgen, wobei jeweils Energie absorbiert werden kann. Zusätzlich kann durch die Umformungen die über den Kontaktabschnitt auf das Gehäuse ausgeübte Kraft verändert werden, so dass beispielsweise nach der zweiten Umformung der Kontaktabschnitt mit einer größeren Kraft gegen das Gehäuse angedrückt wird, wodurch die einer relativen Bewegung von Halteelement und Gehäuse im Crashfall entgegenstehende Reibungskraft erhöht wird. Dadurch kann eine progressiv ansteigende Energieabsorption realisiert werden, so dass eine entsprechend ansteigende Bremswirkung im Crashfall erzeugt wird.

Die vorgenannte Ausführung kann dadurch realisiert werden, dass das Widerlagerelement einen Halteabschnitt aufweist, der sich gegen das Widerlagerelement geneigt von dem ersten Umformabschnitt bis zum Kontaktabschnitt erstreckt, und der Halteabschnitt mindestens einen Teilabschnitt aufweist, der um den zweiten Umformabschnitt gegen das Widerlagerelement umformbar ist, um sich stärker geneigt von dem zweiten Umformabschnitt bis zum Kontaktabschnitt zu erstrecken. Ein Halteabschnitt kann beispielsweise eine bezüglich der Spindelachse radial nach außen gerichtete Federzunge aufweisen, an deren äußeren Endbereich sich ein Kontaktabschnitt befindet, der zur Fixierung des Haltelements elastisch gegen das Gehäuse verspannt ist. Bevorzugt können mehrerer derartige Kontaktabschnitte sternförmig angeordnet sein, und in sich federelastisch ausgebildet sein, beispielsweise als einstückig aus Federstahlblech mit dem Halteelement ausgebildete Federzungen. Nach der ersten Umformung wird ein Halteabschnitt durch die zwischen dem Kontaktabschnitt und dem Gehäuse wirkende Reibungskraft weiter in Richtung gegen den Umformstempel des Widerlagerelements umgeformt und gegen die Spindelachse geneigt, bis es den zweiten Umformabschnitt kontaktiert. Am zweiten Umformabschnitt wird der Halteabschnitt umgeformt und derart weiter gegen das Widerlagerelement umgebogen, so dass der Teilabschnitt zwischen dem zweiten Umformabschnitt und dem am Gehäuse anliegenden Kontaktabschnitt stärker gegen die Spindelachse geneigt ist als zwischen dem ersten und zweiten Umformabschnitt. Der Teilabschnitt bildet eine verkürzte Federzunge, welche eine erhöhte Federkraft radial nach außen ausübt. Dadurch wird eine stärkere elastische Verspannung des Halteelements in dem Gehäuse erzeugt, und damit eine ansteigende Energieabsorptions- und Bremswirkung. Dank dieser Maßnahme lässt sich eine progressive Crashkennung in einem Kraft-Weg-Diagramm realisieren.

Es kann vorgesehen sein, dass das Halteelement als Haltering ausgebildet ist, und das Widerlagerelement als Widerlagerring ausgebildet ist, wobei die ersten und zweiten Umformabschnitte als axial gegen den Haltering gerichtete, zumindest abschnittweise in Umfangsrichtung umlaufende, gegen den Haltering gerichtete Biegekanten ausgebildet sind. Der Haltering ist koaxial zur Spindelachse angeordnet, und kann bevorzugt einen kreisrunden Außenumfang haben, an dem zumindest abschnittweise Kontaktelement angeordnet sind, welche radial von innen gegen die Innenwandung des rohrförmigen Gehäuses verspannt sind. Durch Reib- und/oder Formschluss fixiert der Haltering die Lageranordnung im normalen Betrieb in dem Gehäuse. Im Crashfall wird der Haltering axial in dem Gehäuse verschoben, wobei durch den Kontakt mit dem Gehäuse Energie durch Reibung absorbiert wird. Zusätzlich oder alternativ kann Energieabsorption durch plastische Verformung erfolgen, beispielsweise durch Deformation des Halteelements.

Es ist möglich, dass das Halteelement aus einer von dem Widerlagerelement weg geneigten Form elastisch in eine zum Widerlagerelement hin geneigte Form umklappbar ist. In der normalen Betriebsposition kann das Haltelement derart geformt sein, dass es vom Widerlagerelement aus gesehen unter spitzem Winkel, also <90°, im Bereich eines Kontaktabschnitts an seinem äußeren Umfang gegen das Gehäuse anliegt. Beispielsweise kann das Haltelement eine konische, kegelhülsenförmigen Ringscheibe umfassen, die von dem Widerlagerelement weg gerichtet konisch aufgeweitet ist, und die mit Kontaktelementen an ihrem äußeren Umfang an der Innenwand des rohrförmigen Gehäuses anliegt. Das Widerlagerelement liegt im inneren Randbereich axial an der konischen Ringscheibe an. In dieser Anordnung erfolgt eine stabile Abstützung der Lageranordnung, bei der eine vom Widerlager auf das Haltelement ausgeübte axiale Stützlast den geneigten Rand des Haltelements radial gegen das Gehäuse stemmt, und dadurch für eine quasi widerhakenartige Verspannung sorgt. Überschreitet die auf die Kegelhülse ausgeübte Kraft im Crashfall einen vorgegebenen Grenzwert, wird der innere Randbereich von dem Widerlagerelement axial durch den am Gehäuse fixierten äußeren Umfang hindurchgedrückt, wobei die konische Ringscheibe elastisch umgestülpt wird, so dass die Kegelhülsenform nun in axial umgekehrter Richtung, zum Widerlager hin aufgeweitet ist, mit anderen Worten zum Widerlagerelement hin umgeklappt ist. Das Halteelement liegt nunmehr vom Widerlagerelement aus gesehen im stumpfen Winkel, also >90°, gegen das Gehäuse an. Die axiale Haltekraft ist dadurch gegenüber der anfänglichen, vom Widerlagerelement weg geneigten Form reduziert, so dass das Haltelement gegen die Reibkraft zur Energieabsorption entlang des Crashwegs relativ zum Gehäuse verschoben werden kann. Durch den erforderlichen Schwellenwert der Kraft kann sichergestellt werden, dass das Halteelement nur im Crashfall durch die dann anstehende, hohe Crashkraft umgeklappt wird, und auch nur dann die Energieabsorptionseinrichtung aktiviert wird. Dank dieser Maßnahme lässt sich somit auf einfache Art und Weise eine Losbrechkraftspitze realisieren, so dass, wenn gewünscht, auf ein Scherelement verzichtet werden kann. Das Haltelement kann so geformt und dimensioniert sein, dass es durch die im normalen Betrieb auf die Gewindespindel und das Getrieberad wirkenden Stellkräfte nicht umgeklappt wird, und es somit nur die Lageranordnung in Betriebsposition fixiert, und die Energieabsorptionseinrichtung unbelastet bleibt.

Eine vorteilhafte Ausbildung sieht vor, dass das Gehäuse einen verjüngt in Richtung der Spindelachse zusammenlaufenden Innenquerschnitt hat. Der Innenquerschnitt läuft vom Getrieberad aus gesehen in der von der Gewindespindel weg weisenden axialen Richtung zusammen, mit anderen Worten in der Richtung einer über die Gewindespindel in die Lageranordnung eingeleiteten Crashkraft, die also von der Gewindespindel aus gesehen zum Gehäuse hin weist. Bei einem runden Querschnitt kann das rohrförmige Gehäuse von der Lageranordnung aus gesehen konisch zusammenlaufen. Im Crashfall kann die Lageranordnung - soweit vorhanden - samt Lagerring, Widerlagerring und Haltering in den konisch zusammenlaufenden Querschnitt hinein gestaucht werden. Dabei wächst durch den sich verengenden Querschnitt über den im Crash von der Gewindespindel zum Gehäuse zurückgelegten Crashweg die Reibung zur Innenwandung des Gehäuses fortlaufend an, so dass eine progressiv ansteigende Energieabsorption und Bremswirkung erzeugt wird. Durch die Form der Verjüngung kann eine Energieabsorptionscharakteristik vorgegeben werden. Der zusammenlaufende Innenquerschnitt kann beispielsweise durch in das Gehäuse von außen eingeformte Sicken gebildet sein, wobei diese auf der Innenwandung des Gehäuses nach innen vorspringende Vorsprünge bildet, wobei die Höhe der Vorsprünge an verschiedenen Position unterschiedlich sein kann, wobei sich die Vorsprünge bevorzugt in Richtung der Spindelachse erstrecken. Es ist aber auch denkbar, dass der zusammenlaufende Querschnitt durch eine andere Umformoperation im Gehäuse gebildet ist.

Ein konisch zusammenlaufendes Gehäuse kann mit einen Lagerring und/oder Haltering und/oder Widerlagerring mit gleichbleibendem, vorgegebenem Querschnitt bzw. Durchmesser realisiert werden. Es kann ebenfalls eine vorteilhafte Kombination mit einem durch das Widerlagerelement mittels eines Umformstempels verformbaren Halteelements realisiert werden.

Das Gehäuse kann zumindest einen in Richtung der Spindelachse erstreckten Schlitz oder eine zumindest eine partielle Wandstärkenveränderung aufweisen. Dadurch kann die Reibungskraft zwischen Gehäuse und Halteelement bzw. Lageranordnung vorbestimmt werden, und/oder eine zur plastischen und/oder elastischen Verformung des Gehäuses erforderliche Kraft. Dadurch kann die Energieabsorptionscharakteristik vorgegeben werden.

Durch die Erfindung ergeben sich vielfältige Möglichkeiten zur Realisierung einer angepassten Energieabsorption durch Reibung und Verformung innerhalb des Verstellantriebs durch eine Gestaltung des Gehäuses im Zusammenwirken mit den Elementen der Lageranordnung, und in Kombination mit plastisch verformbaren und/oder aneinander reibenden Energieabsorptionselementen.

Es kann vorgesehen sein, dass die Energieabsorptionseinrichtung eine Biege- und/oder Reißlasche aufweist. Biegelaschen oder -drähte, die Energie durch plastische Verbiegung aufnehmen können, sowie Reißlaschen, die unter Energieabsorption aufgetrennt werden, sowie kombinierte Biege-Reiß-Elemente sind als Energieabsorptionselemente im Stand der Technik bekannt. Erfindungsgemäß können diese in vorteilhafter Weise in dem Verstellantrieb integriert sein, beispielsweise indem sie zwischen dem Gehäuse und dem Getrieberad, oder der Lageranordnung eingegliedert sind. Es ist dabei denkbar und möglich, eine Biege- und/oder Reißlasche einstückig mit dem Gehäuse auszubilden, beispielsweise als Teil der Rohrwandung eines rohrförmigen Gehäuses. Dadurch kann Bauraum und Gewicht eingespart werden.

In einer vorteilhaften Weiterbildung kann es vorgesehen sein, das die Energieabsorptionseinrichtung zumindest eine erste Biege- und/oder Reißlasche und eine zweite Biege- und/oder Reißlasche aufweist, wobei eine Koppelvorrichtung vorgesehen ist, die die erste Biege- und/oder Reißlasche und/oder die zweite Biege- und/oder Reißlasche aus dem Kraftfluss auskoppelt oder einkoppelt, so dass im Crashfall nur die erste Biege- und/oder Reißlasche deformiert wird oder nur die zweite Biege- und/oder Reißlasche deformiert oder die erste Biege- und/oder Reißlasche und die zweite Biege- und/oder Reißlasche deformiert wird oder keiner der Biege- und/oder Reißlaschen deformiert wird. Somit lassen sich auf eine einfache Art und Weise 4 verschiedene Crashniveaus bereitstellen. Die Koppelvorrichtung kann beispielsweise als pyrotechnischer Schalter, als Hubmagnetschalter oder dergleichen ausgebildet sein. Wesentlich ist lediglich, dass die Koppelvorrichtung derart ausgebildet ist, die jeweilige Biege- und/oder Reißlasche in den Kraftfluss einzukoppeln und/oder auszukoppeln.

Eine mögliche Ausführung der Erfindung sieht vor, dass die Energieabsorptionseinrichtung einen zur Spindelachse koaxialen, axial in Richtung der Spindelachse plastisch stauchbaren Hohlkörper aufweist. Der Hohlkörper dient als Energieabsoptionselement, und kann als koaxial die Gewindespindel umgebendes, axial plastisch stauchbares Rohr ausgebildet sein. Das Rohr kann bevorzugt als Wellrohr mit einer oder mehreren, bevorzugt ganz oder teilweise über den Umfang umlaufenden, sickenförmigen radialen Einformungen ausgebildet sein. Ein derartiges Wellrohr hat ein durch Form, Anordnung, Anzahl und Materialstärke der Einformungen in weiten Grenzen anpassbares, vorbestimmbares axiale Deformationsverhalten. Der Hohlkörper kann zwischen der Lageranordnung dem Gehäuse abgestützt sein, wobei die Gewindespindel bei einem Tauchspindelantrieb im zusammengefahrenen Zustand des Verstellantriebs bis in den Hohlkörper eintauchen kann, wodurch eine kompakte Anordnung realisierbar ist.

Eine vorteilhafte Weiterbildung sieht vor, dass das Gehäuse den Hohlkörper aufweist. Dabei kann das Gehäuse rohrförmig ausgebildet sein, um die Lageranordnung koaxial aufzunehmen, und zumindest ein Teilabschnitt des rohrförmigen Gehäuses kann, bevorzugt einstückig, als Wellrohr ausgebildet sein. Der Hohlkörper kann bevorzugt zwischen der Lageranordnung und dem Verbindungselement des Gehäuses angeordnet sein. Vorteilhaft daran ist, dass das Gehäuse selbst als Energieabsorptionselement dient, wodurch Masse, Bauraum und Montageaufwand reduziert werden können.

Zwischen der Gewindespindel und dem Gehäuse kann bevorzugt ein Sollbruchelement angeordnet ist. Das Sollbruchelement kann ein Scherbolzen, ein Niet oder dergleichen sein, der nur bei den im Crashfall auftretenden hohen Kräften bricht, und eine relative Verlagerung der Bauteile der Energieabsorptionseinrichtung zur Energieabsorption freigibt. Beispielsweise kann durch ein Sollbruchelement die Lageranordnung, das Getrieberad und/oder die Gewindespindel im normalen Betrieb relativ zum Gehäuse in axialer Richtung fixiert sind.

Das Gehäuse weist ein Verbindungselement auf, welches eingerichtet und ausgebildet ist um das Gehäuse in Richtung der Spindelachse abgestützt mit einem ersten Lenksäulenbauteil zu verbinden. Das Verbindungselement weist bevorzugt ein Formschlusselement auf, beispielsweise einen oder mehrere von dem Gehäuse nach außen abstehende Zapfen oder Vorsprünge, oder Öffnungen, Absätze oder Vertiefungen, welche mit korrespondierenden Verbindungsmitteln an einer Manteleinheit oder einer Trageinheit einer Lenksäule verbindbar sind. Die Gewindespindel weist ebenfalls ein Verbindungselement auf, mit dem sie in Richtung der Spindelachse abgestützt mit einem zweiten Lenksäulenbauteil der Lenksäule verbindbar ist, welches durch den Verstellantrieb relativ zum ersten Lenksäulenbauteil in Richtung der Spindelachse verstellbar ist, beispielsweise einem teleskopartig verstellbaren Mantelrohr.

Die Erfindung betrifft weiterhin eine Lenksäule umfassend ein erstes Lenksäulenbauteil und ein zweites Lenksäulenbauteil, die in Richtung einer Spindelachse relativ zueinander verstellbar sind, und mit einem Verstellantrieb, der eine Antriebseinheit aufweist, die über ein Verbindungsmittel an dem ersten Lenksäulenbauteil anbringbar und in Richtung der Spindelachse abstützbar ist, und eine in Richtung der Spindelachse an der Antriebseinheit abgestützte, an dem zweiten Lenksäulenbauteil anbringbare und axial in Richtung der Spindelachse abstützbare Gewindespindel. Erfindungsgemäß ist vorgesehen, dass der Verstellantrieb ausgebildet ist nach einer oder mehrerer der vorangehend beschriebenen Ausführungsformen.

Vorteilhaft ist der Einsatz bei einer Lenksäule, bei der die Lenksäulenbauteile mindestens drei in Richtung der Lenksäulenachse relativ zueinander verstellbare Mantelrohre umfassen. Eine derartige, mehrfach teleskopierbare Lenksäule weist einen besonders großen relativen Verstellweg zwischen maximal zusammen gefahrenem und maximal auseinander gefahrenem Zustand auf. Daher ist sie besonders gut geeignet als verstaubare Lenksäule beim autonomen Fahren. Durch den erfindungsgemäßen Verstellantrieb mit integrierter Energieabsorptionseinrichtung kann ein kompakter Aufbau bei großem Verstellweg und hoher Betriebssicherheit realisiert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Ansicht,
- Figur 2: einen erfindungsgemäßen Verstellantrieb einer Lenksäule gemäß Figur 1 in einer freigestellten perspektivischen Ansicht,
- Figur 3: einen Längsschnitt durch den Verstellantrieb gemäß Figur 2 in normalem Betriebszustand,
- Figur 4: den Verstellantrieb gemäß Figur 3 nach einem Crashfall,
- Figur 5: einen Längsschnitt durch einen Verstellantrieb in einer zweiten Ausführung in einer Ansicht wie in Figur 2 in normalem Betriebszustand,
- Figur 6: einen Längsschnitt durch einen Verstellantrieb in einer dritten Ausführung in einer Ansicht wie in Figur 2 in normalem Betriebszustand,
- Figur 7: eine Detailansicht eines Längsschnitts durch eine Energieabsorptionseinrichtung eines Verstellantriebs in normalem Betriebszustand,
- Figur 8: eine Ansicht wie in Figur 7 während eines Crashfalls,
- Figur 9: eine Ansicht wie in Figur 8 nach einem Crashfall,
- Figur 10: einen Längsschnitt durch einen Verstellantrieb in einer vierten Ausführung in einer Ansicht wie in Figur 2 in normalem Betriebszustand,
- Figur 11: einen Verstellantrieb gemäß Figur 3 nach einem Crashfall,
- Figur 12: eine schematische perspektivische Ansicht eines Verstellantriebs in einer fünften Ausführung,
- Figur 13: einen Längsschnitt durch den Verstellantrieb gemäß Figur 12 in normalem Betriebszustand,
- Figur 14: eine schematische perspektivische Ansicht eines Verstellantriebs in einer sechsten Ausführung,
- Figur 15: einen Längsschnitt durch den Verstellantrieb gemäß Figur 14 in normalem Betriebszustand,
- Figur 16: den Verstellantrieb gemäß Figur 15 nach einem Crashfall,
- Figur 17: einen Längsschnitt durch einen Verstellantrieb in einer siebten Ausführung in einer Ansicht wie in Figur 2 in normalem Betriebszustand.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

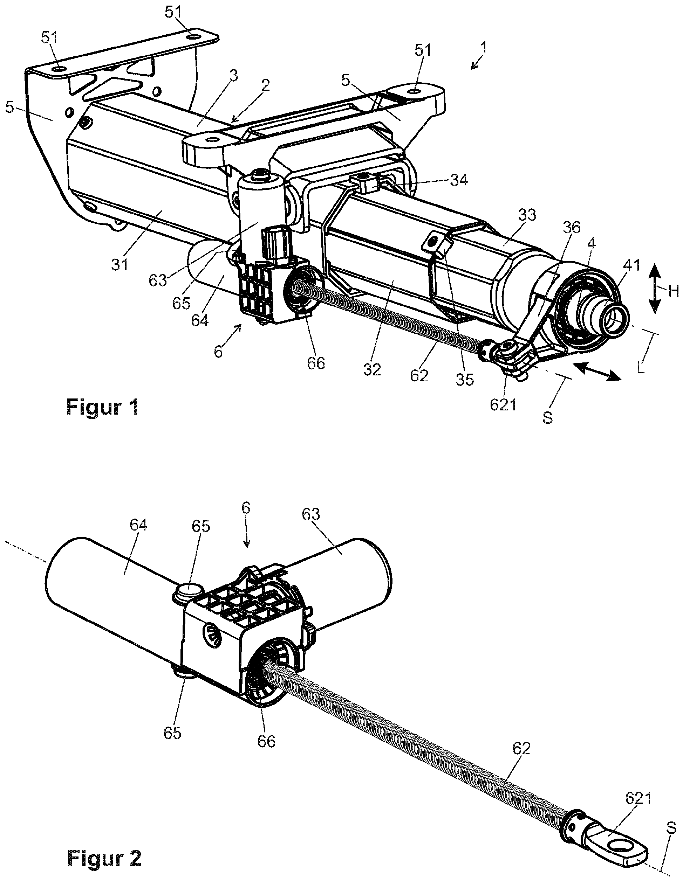

Figur 1 zeigt eine erfindungsgemäße Lenksäule 1 in einer Ansicht bezüglich der Fahrtrichtung von schräg hinten, die eine Stelleinheit 2 aufweist. Die Stelleinheit 2 umfasst eine Manteleinheit 3, die ein Außenmantelrohr 31, ein Zwischenmantelrohr 32 und ein Innenmantelrohr 33 aufweist. Die Mantelrohre 31, 32 und 33 sind in Längsrichtung, dies entspricht der Achsrichtung der Längsachse L, teleskopierend verschiebbar koaxial ineinander angeordnet, wie mit einem Doppelpfeil angedeutet.

In der Manteleinheit 3 ist um die Längsachse L drehbar eine Lenkspindel 4 gelagert, die an ihrem hinteren Ende einen Anschlussabschnitt 41 zur Anbringung eines nicht dargestellten Lenkrads aufweist.

Die Manteleinheit 3 ist in einer zweiteiligen Trageinheit 5 gehalten, welche Befestigungsmittel 51 zur Anbringung an einer nicht dargestellten Fahrzeugkarosserie aufweist.

Ein Verstellantrieb 6 zur Längsverstellung, auch als Längsverstellantrieb bezeichnet, weist einen Spindeltrieb mit einer Spindelmutter 66 und einer darin eingeschraubten Gewindespindel 62 auf, die von einem elektrischen Motor 63 relativ zueinander drehend antreibbar sind. Die Gewindespindel 62 erstreckt sich mit ihrer Spindelachse S parallel zur Längsachse L und ist über einen als Gabelkopf 621 ausgebildetes Verbindungelement mit dem Innenmantelrohr 33 verbunden und axial, d.h. in Richtung der Spindelachse S abgestützt. Die Spindelmutter 66 stützt sich ebenfalls axial über den Verstellantrieb 6 in Längsrichtung, die der Achsrichtung der Längsachse L entspricht, an dem Außenmantelrohr 31 ab, wobei das Außenmantelrohr 31 einen Gabelabschnitt aufweist, und wobei der Verstellantrieb 6 unter Zwischenschaltung eines dämpfenden, als Silentbuchse ausgebildeten Gummielements mit dem Gabelabschnitt gekoppelt sein kann. Durch eine relative Drehung mittels des Motors 63 werden die Gewindespindel 62 und die Spindelmutter 66 je nach Drehrichtung zusammen oder auseinander bewegt, wodurch das Innenmantelrohr 33 in Achsrichtung in das Außenmantelrohr 31 eingefahren oder ausgefahren wird, wie mit dem Doppelpfeil angedeutet ist. Dadurch wird eine Längsverstellung realisiert, durch die ein an dem Anschlussabschnitt 41 angebrachtes Lenkrad nach vorn - in der Darstellung von Figur 1 nach links - in eine Verstauposition gebracht werden kann, in der das Innenmantelrohr 33 und das Zwischenmantelrohr 32 in dem Außenmantelrohr 31 eingefahren, d.h. nach vorn versenkt sind, oder in eine Bedienposition im Bedienbereich, in der die Mantelrohre 31, 32 und 33 auseinander ausgefahren sind.

Alternativ kann sich die Spindelmutter 66 an dem Innenmantelrohr 33, und die Gewindespindel 62 an dem Außenmantelrohr 31 abstützen.

Figur 2 zeigt den Verstellantrieb 6 in einer freigestellten, separaten Ansicht. Die Antriebseinheit des Verstellantriebs 6 weist ein rohrförmiges Gehäuse 64 mit kreisrundem Querschnitt auf, das sich mit seinem Innenraum koaxial zur Spindelachse S erstreckt. Der Motor 63 ist an dem Gehäuse 64 angeflanscht. Das Gehäuse 64 weist zapfenförmige, im gezeigten Beispiel radial nach außen vorstehende Verbindungselemente 65 auf, die bevorzugt in dem Gehäuse 64 derart eingeformt sind, dass diese radial nach außen vorstehen. Diese sind mit korrespondierenden Verbindungsmitteln an dem Außenmantelrohr 31 verbindbar, und bevorzugt formschlüssig axial in Richtung der Spindelachse S daran abgestützt.

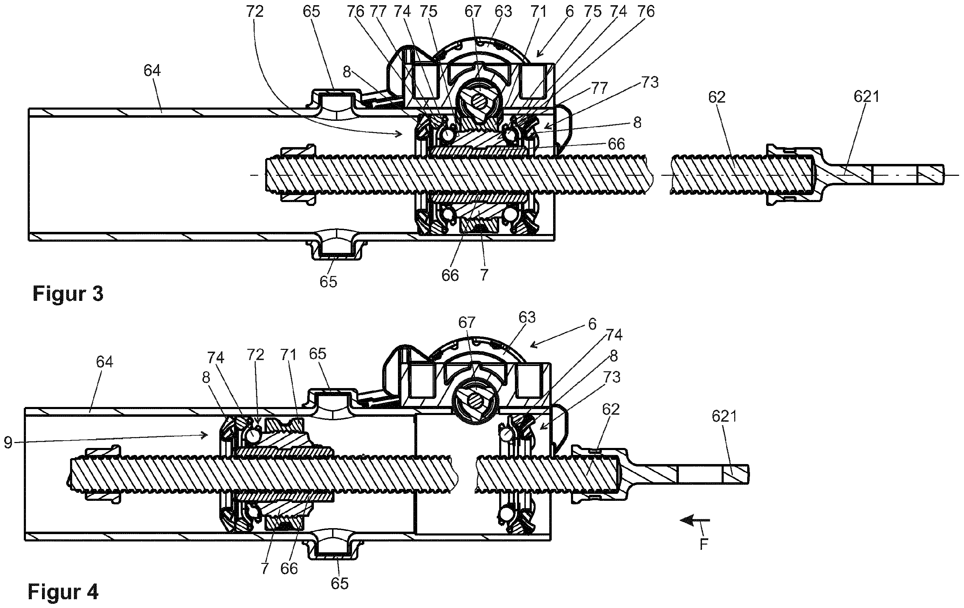

Figur 3 zeigt einen Längsschnitt entlang der Spindelachse S durch den Verstellantrieb 6 in normalem Betriebszustand. Die Gewindespindel 62 greift in eine Spindelmutter 66 ein, welche koaxial drehfest mit einem Getrieberad 7 verbunden ist. Das Getrieberad 7 ist im gezeigten Beispiel als Schneckenrad mit einer außen umlaufenden, als Schneckenverzahnung ausgebildeten Verzahnung 71, mit der eine Schnecke 67 in Getriebeeingriff steht, die von dem Motor 63 um eine quer zur Spindelachse S, in der Ansicht senkrecht zur Schnittebene stehende Schneckenachse drehend antreibbar ist.

Das Getrieberad 7 ist in dem Gehäuse 64 um die Spindelachse S in Lageranordnungen 72 und 73 drehbar gelagert, die jeweils auf axialen Stirnseiten angeordnet sind, und die im gezeigten Beispiel beide als Wälzlager, nämlich als Schrägkugellager ausgebildet sind, mit Kugeln 74, die in beiderseits am Getrieberad 7 umlaufenden, zueinander schräg stehenden Wälzkörperlaufbahnen 75 abrollen. Die gehäuseseitige, in der Zeichnung links liegende erste Lageranordnung 72 weist einen Lagerring 76 auf, der eine der Wälzkörperlaufbahn 75 schräg gegenüberliegende, korrespondierende Wälzkörperlaufbahn hat. Der Lagerring 76 stützt sich von dem axial von dem Getrieberad 7 weg gerichtet, in der Zeichnung nach links, über einen Widerlagerring 77 gegen einen Haltering 8 ab, der ein Halteelement bildet und in dem Gehäuse 64 verspannt ist.

Die spindelseitige, in der Zeichnung rechts liegende zweite Lageranordnung 73 kann im Prinzip zur ersten Lageranordnung 72 spiegelsymmetrisch bezüglich einer senkrecht zur Spindelachse S durch das Getrieberad 7 gehenden Spiegelebene aufgebaut sein. Diese weist ebenfalls einen Lagerring 76 auf, der eine der Wälzkörperlaufbahn 75 schräg gegenüberliegende, korrespondierende Wälzkörperlaufbahn hat. Der zweite Lagerring 76 stützt sich von dem axial von dem Getrieberad 7 weg gerichtet, in der Zeichnung nach rechts, über einen zweiten Widerlagerring 77 gegen einen zweiten Haltering 8 ab, der ebenfalls in dem Gehäuse 64 verspannt ist. Somit ist das Getrieberad mittels einer sogenannten X-Lageranordnung im Gehäuse 64 gelagert.

Im normalen Betriebszustand ist das Getrieberad 7 in einer definierten axialen Position in den Lageranordnungen 72 und 73 drehbar gelagert, die durch die in dem Innenraum des Gehäuses 64 verspannten Halteringe 8 in axialer Richtung der Spindelachse S gehalten und abgestützt sind.

Im Crashfall wirkt über den Gabelkopf 621 auf die Spindel 62 eine hohe Crashkraft F, die wie in Figur 4 eingezeichnet von der Spindelseite zur Gehäuseseite gerichtet ist, in den Zeichnungen nach links. Unter einer hohen Crashkraft F werden Kräfte mit einem Wert größer gleich 1000 N verstanden. Diese Crashkraft F wird von der Gewindespindel 62 über die Spindelmutter 66 auf das Getrieberad 7 übertragen, und von dem Getrieberad 7 über die Lageranordnung 72 auf den Haltering 8. Entsprechend wirkt die Crashkraft F der Haltekraft, die zwischen dem Haltering 8 und dem Gehäuse 64 durch die Verspannung erzeugt wird, in axialer Richtung entgegen. Übersteigt im Crashfall die Crashkraft F diese Haltekraft, wird die Verbindung gelöst und das Getrieberad 7 wird zusammen mit der Gewindespindel 62 samt der Lageranordnung 72 in axialer Richtung aus dem Getriebeeingriff heraus in dem Innenraum des Gehäuses 64 entlang bewegt. Dabei wirkt aufgrund der Verspannung zwischen dem bewegten Haltering 8 und dem Gehäuse 64 eine Reibungskraft, wodurch kinetische Energie absorbiert und in Wärme umgewandelt wird, so dass die Gewindespindel 62 relativ zum Gehäuse 64 abgebremst wird. In dieser Ausführung wird durch den Haltering 8 zusammen mit dem Gehäuse 54 eine Energieabsorptionseinrichtung 9 gebildet, die erfindungsgemäß in das Gehäuse 64 des Verstellantriebs 6 integriert ist.

Die zweite Lageranordnung 73 verbleibt in ihrer ursprünglichen Position im Gehäuse, wie in Figur 4 erkennbar ist. Die Schnecke 67 steht mit dem Getrieberad 7 nicht mehr im Wirkeingriff, so dass diese entkoppelt sind. Das Gewinde zwischen der Spindelmutter 66 und der Gewindespindel 62 ist derart ausgelegt, dass eine Selbsthemmung zwischen Spindelmutter 66 und Gewindespindel 62 vorliegt, so dass ein Durchdrücken der Gewindespindel 62 durch die Spindelmutter 66 wirksam verhindert ist und somit die Energieabsorptionseinrichtung 9 im Crashfall bestimmungsgemäß wirksam werden kann.

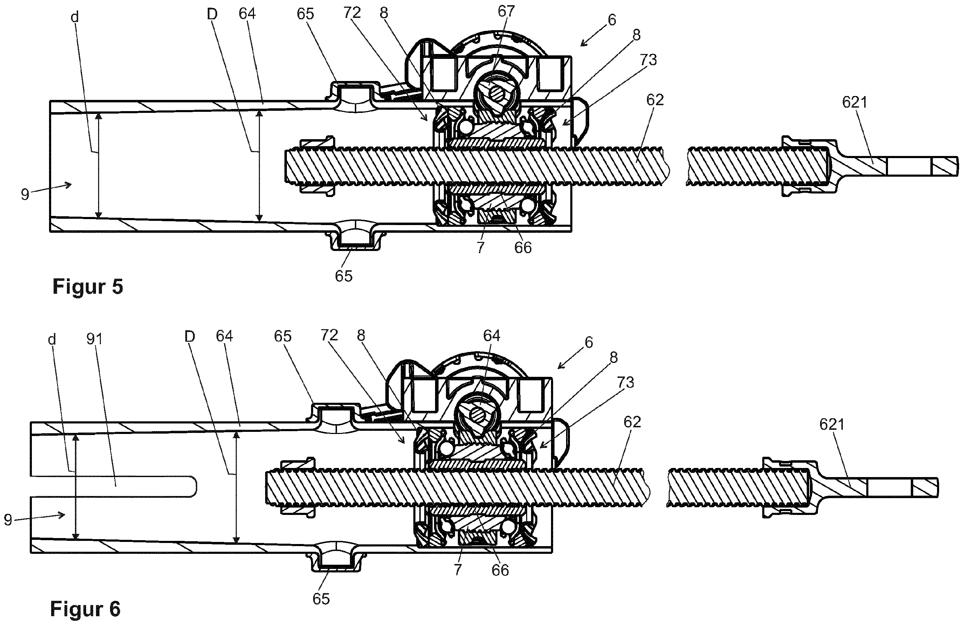

Die in Figur 5 in einer Ansicht wie in Figur 3 gezeigte zweite Ausführung zeichnet sich zusätzlich dadurch aus, dass der Innenquerschnitt des Gehäuses 64, den die Lageranordnung 72 im Crashfall wie in Figur 4 gezeigt in axialer Richtung passiert, sich von der Spindelseite zur Gehäuseseite hin, also in Richtung der Crashkraft F - in den Zeichnungen von rechts nach links - konisch verjüngt. Dabei verengt sich der Durchmesser D, im Bereich der Fixierung der Lageranordnung 72 im normalen Betrieb, auf einen kleineren Enddurchmesser d, im gezeigten Beispiel kontinuierlich kegelförmig zusammenlaufend. Dadurch wird erreicht, dass im Crashfall bei der axialen Verschiebung in die in Figur 4 gezeigte Position die Reibung zwischen dem Haltering 8 und dem Gehäuse über den axialen Verschiebeweg im Crashfall, dem sogenannten Crashweg, ansteigt, wodurch eine progressive Energieabsorptionscharakteristik realisiert werden kann. Die Verkleinerung des Durchmessers kann dabei auch diskontinuierlich bzw. ungleichmäßig erfolgen und ist nicht auf eine vorbestimmte Form begrenzt.

Die in Figur 6 gezeigte dritte Ausführung ist im Prinzip wie die vorgenannte zweite Ausführung aufgebaut, wobei das rohrförmige Gehäuse 64 zusätzlich einen über einen axialen Teilbereich durchgehenden Schlitz 91 aufweist. Durch Größe, Form und Anordnung eines oder mehrerer derartiger Schlitze 91 kann die radiale Steifigkeit des Gehäuses 64 definiert verringert werden, so dass die wirkende Reibung zum Haltering 8 und dadurch die Energieabsorptionscharakteristik vorgegeben werden kann. Der Schlitz 91 kann auch in Gehäusen 64 ohne Verjüngung des Durchmessers zum Einsatz kommen, beispielsweise kann das Gehäuse 64 der ersten Ausführungsform auch mit einem oder mehreren Schlitzen versehen werden. Ebenfalls ist die Form des Schlitzes 91 nicht auf jene Form wie in der dritten Ausführung dargestellt begrenzt. Der Schlitz 91 kann auch wellenförmig oder spiralförmig in Umfangsrichtung verlaufen. Weiters kann alternativ oder zusätzlich zu einem Schlitz auch weitere Durchbrüche im Gehäuse 64 vorgesehen sein.

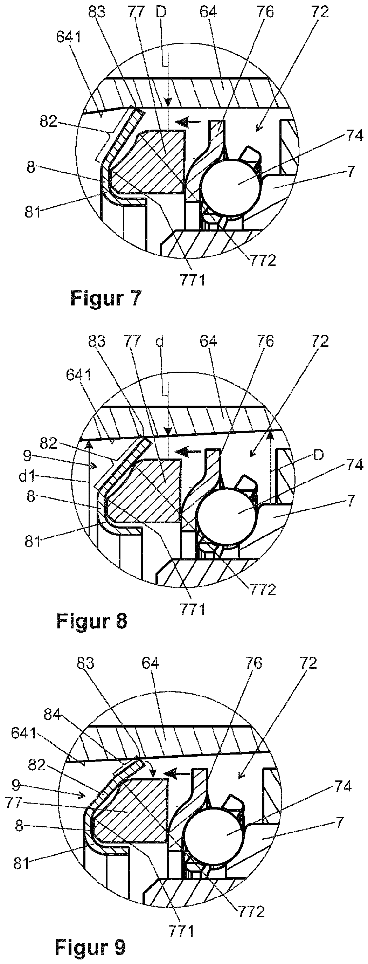

In den Figuren 7, 8 und 9 ist eine Weiterbildung der Erfindung in einer vergrößerten Schnittansicht der Lageranordnung 72 dargestellt, die im Prinzip bei jeder der vorangehend erläuterten Ausführungen realisierbar ist, bevorzugt mit konisch zusammenlaufenden Gehäuse 64 wie in den Figuren 5 und 6.

Der Lagerring 76 stützt sich auf seiner dem Haltering 8 zugewandten Seite axial gegen den Widerlagerring 77 ab. Der Widerlagerring 77 weist auf seiner dem Haltering 8 zugewandten Stirnseite, in den Zeichnungen links, einen Umformstempel auf, mit einem als umlaufende Biegekante 771 ausgebildeten ersten Umformelement, und einem ebenfalls als umlaufende Biegekante 772 ausgebildeten zweiten Umformelement. Die Biegekante 772 ist gegenüber der Biegekante 771 radial nach außen, und axial in Richtung auf das Getrieberad 7 zu beabstandet. Der Haltering 8 weist einen zentralen Stützring 81 auf, der axial gegen den Widerlagerring 77 anliegt und von dem sich ein Halteabschnitt 82 von der ersten Biegekante 771 gegen die Spindelachse S geneigt radial nach außen erstreckt. An seinem äußeren Ende weist der Halteabschnitt 82 einen Kontaktabschnitt 83 auf, der beispielsweise einen zumindest abschnittweise umlaufenden Grat oder eine Haltekante haben kann, womit er von innen an der Innenwand 641 des Gehäuses 64 anliegt. Dadurch, dass der Halteabschnitt 82 als biegeelastische Federzunge ausgebildet sein kann, bevorzugt einstückig mit dem Haltering 8 als Stanz-Biege-Formteil aus Federstahlblech, wird der Kontaktabschnitt 83 federnd vorgespannt, wodurch der Haltering 8 elastisch in dem Gehäuse 64 verspannt ist.

In dem normalen Betriebszustand gemäß Figur 7 erstreckt sich der Halteabschnitt 82 gegen den Widerlagerring 77 geneigt von der ersten Biegekante 771 bis gegen das Gehäuse 64, und zwar in einem Bereich mit dem größeren Durchmesser D. Die zweite Biegekante 772 hat keinen Kontakt mit dem Haltering 8.

Figur 8 zeigt die Situation im Crashfall, bei der die Lageranordnung 72 samt Haltering 8 in Wirkrichtung der Crashkraft F in dem bevorzugt konisch zusammenlaufenden Gehäuse 64 in einen Innenbereich mit einem kleineren Durchmesser d axial verlagert ist, wie mit dem Pfeil angedeutet ist. Dadurch wird der der Kontaktabschnitt 83 radial nach innen gedrückt, und der Halteabschnitt 82 stärker gegen die Spindelachse S geneigt. Durch die dabei erzeugte Biegeverformung um die erste Biegekante 771 wird der Kontaktabschnitt 83 elastisch gespannt und fester gegen das Gehäuse 64 angedrückt, und die Reibungskraft steigt an, wodurch die Energieabsorption vergrößert wird. Die Neigung vergrößert sich, bis der Halteabschnitt 82 die zweite Biegekante 772 kontaktiert. Dadurch wird die wirksame Länge des Halteabschnitts 82 reduziert und somit die wirksame Steifigkeit des Halteabschnitts 82, die jetzt noch federn kann, erhöht, denn je kürzer die wirksame Länge des Halteabschnitts, desto steifer ist diese.

Wird der Haltering 8 beim Crash noch weiter in den konischen Bereich hinein verlagert, in der Darstellung von Figur 5 oder 6 nach links, wird der Kontaktabschnitt 83 noch weiter radial nach innen gedrückt. Dadurch, dass der Halteabschnitt 82 bereits an der zweiten Biegekante 772 anliegt und als Ganzes relativ zur ersten Biegekante 771 nicht weiter nach innen geneigt werden kann, wird der äußere Teilabschnitt 84 des Halteabschnitts 82, der sich von der zweiten Biegekante 772 bis zum Kontaktabschnitt 83 erstreckt, um die zweite Biegekante 772 radial nach innen umgebogen, wie mit dem gebogenen Pfeil angedeutet. Mit anderen Worten wird der Halteabschnitt 62 nochmals um die zweite Biegekante 772 abgewinkelt, so dass der äußere Teilabschnitt 84 noch stärker gegen die Spindelachse geneigt ist. Dadurch wird die wirksame elastische Länge der den halteabschnitt bildenden Federzunge verkürzt, und dadurch die elastische Kraft des Kontaktabschnitts 83 gegen das Gehäuse 64 nochmals erhöht. Entsprechend wird die Energieabsorption weiter vergrößert.

Durch den Umformstempel mit den Biegekanten 771 und 772 kann auf diese Weise im Zusammenspiel mit dem verformbaren Haltering 8 und bevorzugt mit dem konisch zusammenlaufenden Gehäuse 64 eine progressiv ansteigende Energieabsorptionscharakteristik realisiert werden.

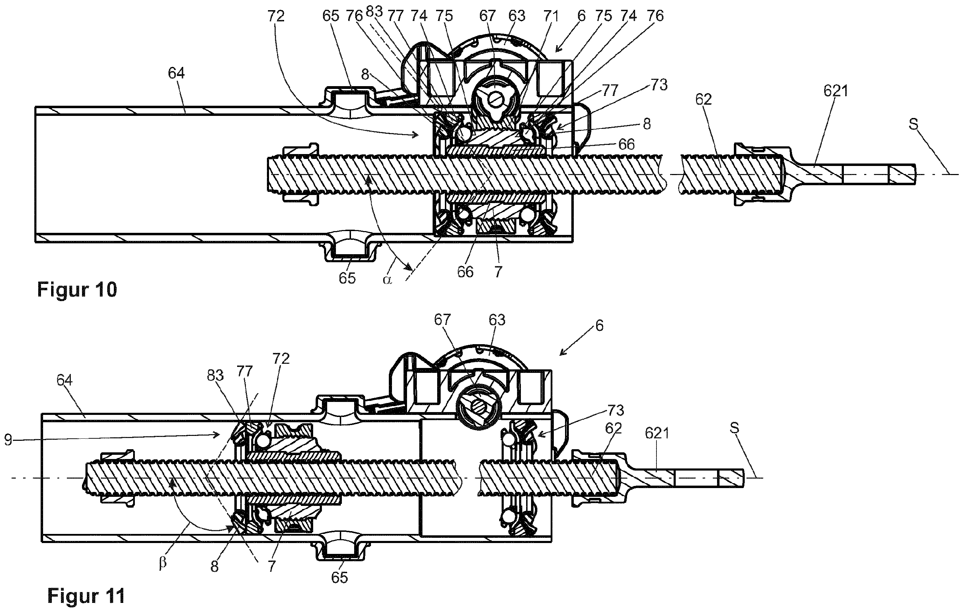

In den Figuren 10 und 11 ist eine weitere Weiterbildung in derselben Ansicht wie in den Figuren 3 und 4 gezeigt, und zwar ebenfalls im normalen Betriebszustand und nach einem erfolgten Crash. Im normalen Betriebszustand gemäß Figur 10 hat der Haltering 8 der Lageranordnung 72 zumindest in seinem äußeren Randbereich, in dem er mit dem Kontaktabschnitt 83 gegen das Gehäuse 64 verspannt ist, eine von dem Widerlagerring 77 weg geneigte Form. Mit anderen Worten kann das Haltelement 8 eine konische, kegelhülsenförmige Ringscheibe umfassen, die von dem Widerlagerelement 77 weg gerichtet konisch aufgeweitet ist, und die mit Kontaktelementen 83 an ihrem äußeren Umfang an der Innenwand des rohrförmigen Gehäuses 64 anliegt. Von dem Widerlagerelement 77 aus gesehen liegt das Halteelement 8 unter einem spitzen Winkel α, also α<90°, im Bereich eines Kontaktabschnitts 83 an seinem äußeren Umfang gegen das Gehäuse 64 an. Zur besseren Übersicht ist α gegen die Spindelachse S eingezeichnet.

Überschreitet die Crashkraft F einen vorgegebenen Grenzwert, wird der innere Bereich des Halterings 8 in Richtung der Crashkraft F in axialer Richtung durch den am Gehäuse 64 abgestützten äußeren Randbereich hindurchgedrückt, so dass die konische Ringscheibe des Halterings 8 elastisch umgestülpt wird, und die Kegelhülsenform nun in axial umgekehrter Richtung, zum Widerlagerring 77 hin aufgeweitet ist, mit anderen Worten der Haltering 8 zum Widerlagerring 77 hin umgeklappt ist. Nach dem Umklappen liegt der Haltering 8 vom Widerlagerelement 77 aus gesehen unter einem stumpfen Winkel β, also β >90°, im Bereich eines Kontaktabschnitts 83 an seinem äußeren Umfang gegen das Gehäuse 64 an. Dadurch kann die nachfolgende relative Bewegung unter Energieabsorption erfolgen.

Der umklappbare Haltering 8 bildet einen Schwellwertschalter, welcher eine relative Bewegung nur beim Überschreiten eines Grenzwerts der einwirkenden Kraft freigibt. Alternativ oder zusätzlich können Sollbruchelemente wie Schernieten oder dergleichen, welche beim Überschreiten eines Kraft-Grenzwerts brechen und eine relative Bewegung zur Aktivierung einer Energieabsorptionseinrichtung freigeben.

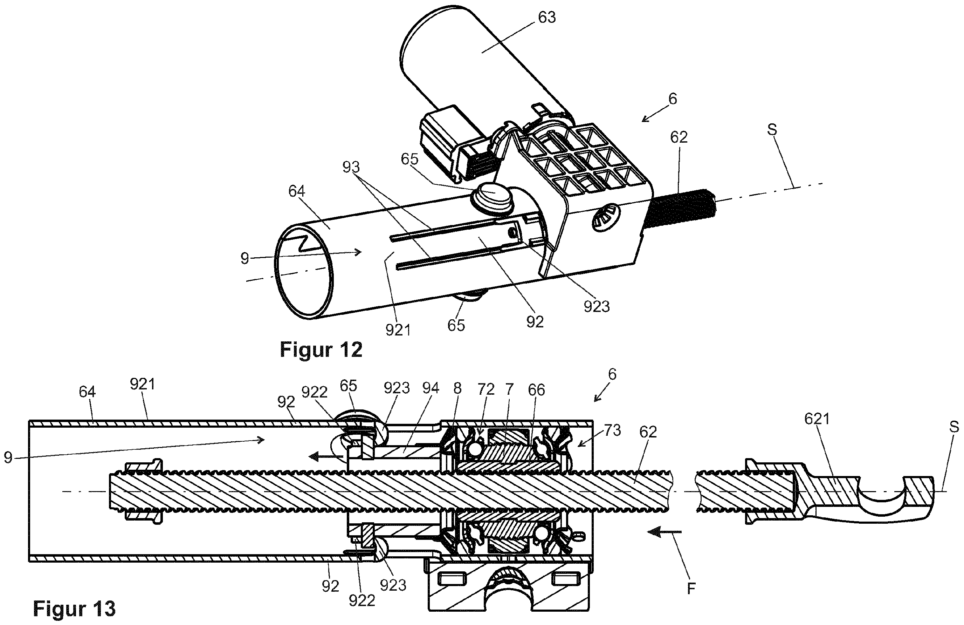

Figur 12 zeigt in einer perspektivischen Ansicht eine weitere Ausführung eines Verstellantriebs 6, und Figur 13 einen Längsschnitt im normalen Betriebszustand wie in Figur 3.

Die Energieabsorptionseinrichtung 9 weist als Energieabsorptionselemente zwei Biegestreifen 92 auf, welche durch eingebrachte Längsschlitze 93 einstückig mit der Wandung des Gehäuses 64 ausgebildet sind. Alternativ kann anstelle der Längsschlitze 93 eine Prägung vorgesehen sein zur Bereitstellung eine Reißlasche. Wie in Figur 12 erkennbar ist, geht das eine Ende 921 des Biegestreifens 92 einstückig in das Gehäuse 64 über, und der Biegestreifen 92 verläuft über eine Umbiegung 923 von etwa 180° radial ins Innere des Gehäuses bis zum freien zweite Ende 922, welches folglich im Wesentlichen in dieselbe Richtung weist wie das erste Ende 921. Das freie Ende 922 ist mit einem Übertragungsstück 94 verbunden, welches axial von außen, auf der dem Getrieberad abgewandten Stirnseite, gegen die Lageranordnung 72 abgestützt ist, beispielsweise gegen den Haltering 8. Wirkt eine Crashkraft F auf die Gewindespindel 62, wird die Lageranordnung 72 wie oben beschrieben in axialer Richtung in dem Gehäuse 64 verlagert. Dabei wird das freie Ende 922 von dem Übertragungsstück 94 in Richtung auf das feste Ende 921 hin mitgenommen, und der Biegestreifen 92 wird um die Umbiegung 923 fortlaufend umgebogen. Durch die dabei geleistete Verformungsarbeit wird kinetische Energie absorbiert, und die Gewindespindel 62 relativ zum Gehäuse 64 abgebremst. Die Kopplung zwischen dem Übertragungsstück 94 und dem freien Ende 922 kann in einer weiteren Ausführungsform mittels einer Koppeleinrichtung erfolgen, die beispielsweise als pyrotechnischer Schalter ausgebildet ist, um die Biegestreifen aus oder ein zu koppeln, so das entweder einer der Biegestreifen 92, beide Biegestreifen 92 oder keiner der Biegestreifen 92 im Crashfall deformiert wird.

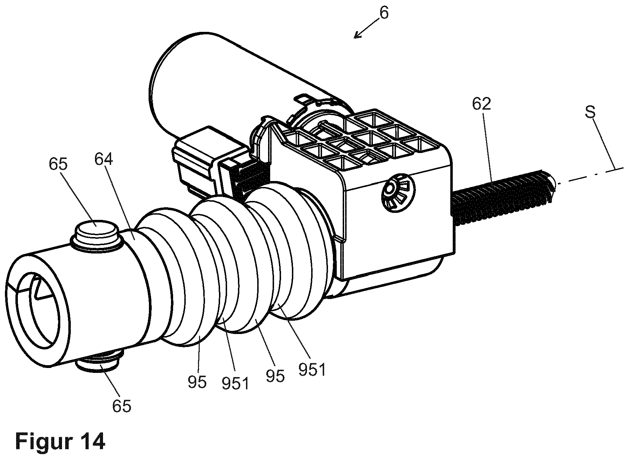

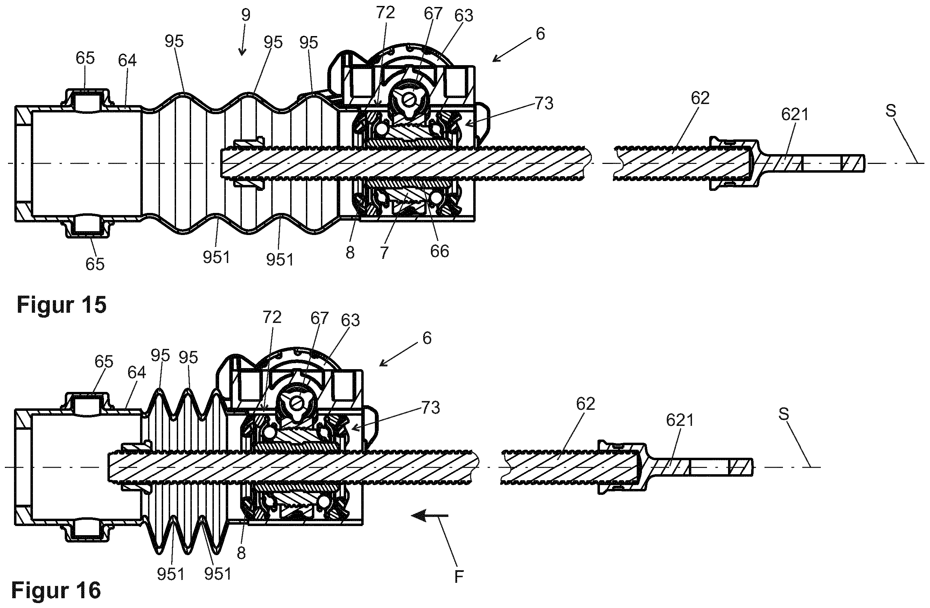

Eine weitere Ausführungsform ist perspektivisch in Figur 14, und im normalen Betriebszustand und nach einem Crash in den Figuren 15 und 16 in Schnittansichten wie in den Figuren 3 und 4 dargestellt.

Dabei weist das rohrförmige Gehäuse 64 in einem Abschnitt zwischen den Verbindungselementen 65 und dem Getrieberad 7 ein Wellrohr 95 auf, welches eine Mehrzahl von axial aufeinander folgenden, radial eingeformten, bevorzugt über den Umfang umlaufenden Sicken 951 aufweist, und ein Energieabsorptionselement bildet. Das Wellrohr 95 ist koaxial zur Spindelachse S angeordnet und kann mit dem Gehäuse 64 verbunden, oder einstückig mit diesem ausgebildet sein. Die Gewindespindel 62 kann wie dargestellt zumindest teilweise axial in dem Wellrohr 95 angeordnet sein.

Im Crashfall wird das Wellrohr 95 in Richtung der dann einwirkenden Crashkraft F axial in Richtung der Spindelachse S plastisch zusammengestaucht, wie in Figur 16 dargestellt, wodurch kinetische Energie absorbiert wird.

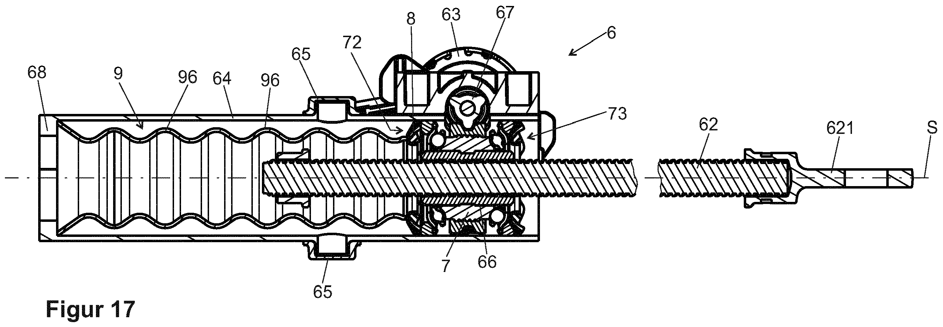

Figur 17 zeigt in einer Schnittansicht wie Figur 3 eine weitere Ausführung. Diese hat wie die in den Figuren 3 und 4 gezeigte Ausführung ein rohrförmiges Gehäuse 64. Als Energieabsorptionselement ist in dem Gehäuse 64 ein Wellrohr 96 angeordnet, welches eine Vielzahl von umlaufenden Sicken hat und zwischen der Lageranordnung 72 und einem axialen Widerlager 68 an dem der Lageranordnung 72 abgewandten Ende des Gehäuses 64 abgestützt. Im Crashfall wird die Lageranordnung 72 wie in Figur 4 gezeigt in Richtung auf das der Lageranordnung 72 abgewandte Ende des Gehäuses 64 hin bewegt, wodurch das Wellrohr 96 axial zusammengestaucht wird, und kinetische Energie absorbiert. Eine progressive Crashkennung lässt sich dadurch realisieren, in dem das gestauchte Wellrohr 96 an die Innenwandung des Gehäuses 64 radial ansteht und somit es beim weiteren Zusammmenstauchen zu einem Anstieg der Crashkraft.

Die in den Figuren 12 bis 17 gezeigten Energieabsorptionseinrichtungen 9 können miteinander, und auch in Kombinationen mit den durch den Haltering 8 realisierten Energieabsorptionseinrichtungen 9 gemäß den Figuren 3 bis 11 kombiniert werden. Ein umklappbarer Haltering 8 gemäß den Figuren 10 und 11 kann als Auslöseeinrichtung zur Aktivierung einer Energieabsorptionseinrichtung 9 mit sämtlichen anderen Ausführungen kombiniert werden.

### Bezugszeichenliste

- 1: Lenksäule
- 2: Stelleinheit
- 3: Manteleinheit
- 31: Außenmantelrohr
- 32: Zwischenmantelrohr
- 33: Innenmantelrohr
- 34, 35: Anschlag
- 4: Lenkspindel
- 41: Anschlussabschnitt
- 5: Trageinheit
- 51: Befestigungsmittel
- 6: Verstellantrieb
- 62: Gewindespindel
- 621: Gabelkopf
- 63: Motor
- 64: Gehäuse
- 65: Verbindungselement
- 66: Spindelmutter
- 67: Schnecke
- 68: Widerlager
- 7: Getrieberad
- 71: Verzahnung
- 72, 73: Lageranordnung
- 74: Kugeln
- 75: Wälzkörperlaufbahn
- 76: Lagerring
- 77: Widerlagerring
- 771: Biegekante
- 772: Biegekante
- 8: Haltering
- 81: Stützring
- 82: Halteabschnitt
- 83: Kontaktabschnitt
- 84: Teilabschnitt
- 9: Energieabsorptionseinrichtung
- 91: Schlitz
- 92: Biegestreifen
- 921: erstes Ende
- 922: zweites Ende
- 923: Umbiegung
- 93: Längsschlitze
- 94: Übertragungsstück
- 95: Wellrohr
- 96: Wellrohr

- L: Längsachse
- S: Spindelachse
- F: Crashkraft

## Patentansprüche

1. Verstellantrieb (6) für eine Lenksäule (1) für ein Kraftfahrzeug, umfassend ein Gehäuse (64) welches mit der Lenksäule (1) verbindbar ist, in dem ein von einem Motor (63) drehend antreibbares Getrieberad (7) in einer Lageranordnung (72, 73) um eine Spindelachse (S) drehbar gelagert ist, an dem eine in eine Spindelmutter (66) eingreifende Gewindespindel (62) axial in Richtung der Spindelachse (S) abgestützt ist, **dadurch gekennzeichnet,**
**dass** zwischen der Gewindespindel (62) und dem Gehäuse (64) eine Energieabsorptionseinrichtung (9) angeordnet ist, welche ausgebildet ist zur Absorption von kinetischer Energie bei einer relativen Verlagerung der Gewindespindel (62) zum Gehäuse (64) in Richtung der Spindelachse (S).

2. Verstellantrieb (6) nach Anspruch 1, **dadurch gekennzeichnet, dass** die Energieabsorptionseinrichtung (9) ein Energieabsorptionselement (8, 92, 95, 96) aufweist.

3. Verstellantrieb (6) nach Anspruch 1 oder 2, **dadurch gekennzeichnet, dass** die Energieabsorptionseinrichtung (9) mit der Lageranordnung (72) und dem Gehäuse (64) zusammenwirkt.

4. Verstellantrieb (6) nach einem der vorangehenden Ansprüche, **dadurch gekennzeichnet, dass** das Gehäuse (64) rohrförmig in Richtung der Spindelachse (S) ausgebildet ist, wobei die Lageranordnung (72) koaxial in dem Gehäuse (64) aufgenommen ist.

5. Verstellantrieb (6) nach einem der vorangehenden Ansprüche, **dadurch gekennzeichnet, dass** ein Halteelement (8) zwischen einem Widerlagerelement (77) der Lageranordnung (72) und dem Gehäuse (64) angeordnet ist.

6. Verstellantrieb (6) nach Anspruch 5, **dadurch gekennzeichnet, dass** das Halteelement (8) ein Energieabsorptionselement aufweist.

7. Verstellantrieb (6) nach Anspruch 5 oder 6, **dadurch gekennzeichnet, dass** das Halteelement (8) einen gegen das Gehäuse (64) verspannten Kontaktabschnitt (83) aufweist.

8. Verstellantrieb (6) nach einem der Ansprüche 5 bis 7, **dadurch gekennzeichnet, dass** das Widerlagerelement (77) einen mit dem Halteelement (8) zusammenwirkenden Umformstempel aufweist, der mindestens einen Umformabschnitt (771, 772) aufweist.

9. Verstellantrieb (6) nach Anspruch 8, **dadurch gekennzeichnet, dass** das Widerlagerelement (77) einen ersten Umformabschnitt (771) und mindestens einen relativ dazu beabstandeten zweiten Umformabschnitt (772) aufweist, wobei der erste Umformabschnitt (771) und der zweite Umformabschnitt (772) ausgebildet sind, dass das Halteelement (8) nach einer ersten Umformung um den ersten Umformabschnitt (771) in einer zweiten Umformung um den zweiten Umformabschnitt (772) umformbar ist.

10. Verstellantrieb (6) nach Anspruch 8 oder 9, **dadurch gekennzeichnet, dass** das Halteelement (8) einen Halteabschnitt (82) aufweist, der sich gegen das Widerlagerelement (77) geneigt von dem ersten Umformabschnitt (771) bis zum Kontaktabschnitt (83) erstreckt, und der Halteabschnitt (82) mindestens einen Teilabschnitt (84) aufweist, der um den zweiten Umformabschnitt (772) gegen das Widerlagerelement (77) umformbar ist, um sich stärker geneigt von dem zweiten Umformabschnitt (772) bis zum Kontaktabschnitt (83) zu erstrecken.

11. Verstellantrieb (6) nach einem der Ansprüche 8 bis 10, **dadurch gekennzeichnet, dass** das Halteelement als Haltering (8) ausgebildet ist, und das Widerlagerelement als Widerlagerring (77) ausgebildet ist, wobei die ersten und zweiten Umformabschnitte (771, 772) zumindest abschnittweise als in Umfangsrichtung umlaufende, gegen den Haltering (8) gerichtete Biegekanten (771, 772) ausgebildet sind.

12. Verstellantrieb (6) nach einem der vorangehenden Ansprüche, **dadurch gekennzeichnet, dass** das Gehäuse (64) einen verjüngt in Richtung der Spindelachse (S) zusammenlaufenden Innenquerschnitt hat und/oder zumindest einen in Richtung der Spindelachse (S) erstreckten Schlitz (91) aufweist und/oder eine zumindest partielle Wandstärkenveränderung aufweist.

13. Verstellantrieb (6) nach einem der vorangehenden Ansprüche, **dadurch gekennzeichnet, dass** die Energieabsorptionseinrichtung (9) zumindest eine Biege- und/oder Reißlasche (92) aufweist.

14. Verstellantrieb (6) nach einem der vorangehenden Ansprüche, **dadurch gekennzeichnet, dass** die Energieabsorptionseinrichtung (9) einen zur Spindelachse (S) koaxialen, axial in Richtung der Spindelachse (S) plastisch zusammenstauchbaren Hohlkörper (95, 96) aufweist.

15. Verstellantrieb (6) nach Anspruch 14, **dadurch gekennzeichnet, dass** das Gehäuse (64) den Hohlkörper (95, 96) aufweist.

16. Verstellantrieb (6) nach einem der vorangehenden Ansprüche, **dadurch gekennzeichnet, dass** das Getrieberad (7) drehfest mit der Spindelmutter (66) oder drehfest mit der Gewindespindel (62) verbunden ist.

17. Verstellantrieb (6) nach einem der vorangehenden Ansprüche, **dadurch gekennzeichnet, dass** zwischen der Gewindespindel (62) und dem Gehäuse (64) ein Sollbruchelement angeordnet ist.

18. Lenksäule (1) umfassend ein erstes Lenksäulenbauteil (31) und ein zweites Lenksäulenbauteil (33), die in Richtung einer Spindelachse (S) relativ zueinander verstellbar sind, und mit einem Verstellantrieb (6), der ein Gehäuse (64) aufweist, das über ein Verbindungsmittel (65) an dem ersten Lenksäulenbauteil (31) anbringbar und in Richtung der Spindelachse (S) abstützbar ist, und eine in Richtung der Spindelachse (S) an dem Gehäuse (64) abgestützte, an dem zweiten Lenksäulenbauteil (33) anbringbare und in Richtung der Spindelachse (S) abstützbare Gewindespindel (62), **dadurch gekennzeichnet,**
**dass** der Verstellantrieb (6) ausgebildet ist nach einem der Ansprüche 1 bis 17.

19. Lenksäule (1) nach Anspruch 18, **dadurch gekennzeichnet, dass** die Lenksäulenbauteile mindestens drei in Richtung der Lenksäulenachse (L) relativ zueinander verstellbare Mantelrohre (31, 32, 33) umfassen.

## Claims

1. Adjustment drive (6) for a steering column (1) for a motor vehicle, comprising a housing (64) which can be connected to the steering column (1), in which a gear wheel (7) which can be driven in rotation by a motor (63) is mounted in a bearing arrangement (72, 73) so as to be rotatable about a spindle axis (S), on which a threaded spindle (62) engaging in a spindle nut (66) is supported axially in the direction of the spindle axis (S),
**characterized in that**
**in that** an energy absorption device (9) is arranged between the threaded spindle (62) and the housing (64), which is designed to absorb kinetic energy when the threaded spindle (62) is displaced relative to the housing (64) in the direction of the spindle axis (S).

2. Adjustment drive (6) according to claim 1, **characterized in that** the energy absorption device (9) has an energy absorption element (8, 92, 95, 96).

3. Adjustment drive (6) according to claim 1 or 2, **characterized in that** the energy absorption device (9) interacts with the bearing arrangement (72) and the housing (64).

4. Adjustment drive (6) according to one of the preceding claims, **characterized in that** the housing (64) is tubular in the direction of the spindle axis (S), the bearing arrangement (72) being accommodated coaxially in the housing (64).

5. Adjustment drive (6) according to one of the preceding claims, **characterized in that** a retaining element (8) is arranged between an abutment element (77) of the bearing arrangement (72) and the housing (64).

6. Adjustment drive (6) according to claim 5, **characterized in that** the holding element (8) has an energy absorption element.

7. Adjustment drive (6) according to claim 5 or 6, **characterized in that** the retaining element (8) has a contact section (83) braced against the housing (64).

8. Adjustment drive (6) according to one of claims 5 to 7, **characterized in that** the abutment element (77) has a forming punch which interacts with the retaining element (8) and has at least one forming section (771, 772).

9. Adjustment drive (6) according to claim 8, **characterized in that** the abutment element (77) has a first forming section (771) and at least one second forming section (772) spaced apart relative thereto, the first forming section (771) and the second forming section (772) being designed such that the retaining element (8) can be formed around the first forming section (771) in a second forming operation around the second forming section (772) after a first forming operation.

10. Adjustment drive (6) according to claim 8 or 9, **characterized in that** the holding element (8) has a holding section (82) which extends inclined against the abutment element (77) from the first forming section (771) to the contact section (83), and the holding section (82) has at least one partial section (84) which can be formed around the second forming section (772) against the abutment element (77) in order to extend more inclined from the second forming section (772) to the contact section (83).

11. Adjustment drive (6) according to one of claims 8 to 10, **characterized in that** the retaining element is designed as a retaining ring (8), and the abutment element is designed as an abutment ring (77), the first and second forming sections (771, 772) being designed at least in sections as circumferential bending edges (771, 772) directed towards the retaining ring (8).

12. Adjustment drive (6) according to one of the preceding claims, **characterized in that** the housing (64) has a tapered internal cross-section converging in the direction of the spindle axis (S) and/or has at least one slot (91) extending in the direction of the spindle axis (S) and/or has an at least partial change in wall thickness.

13. Adjustment drive (6) according to one of the preceding claims, **characterized in that** the energy absorption device (9) has at least one bending and/or tearing tab (92).

14. Adjustment drive (6) according to one of the preceding claims, **characterized in that** the energy absorption device (9) has a hollow body (95, 96) which is coaxial with the spindle axis (S) and can be plastically compressed axially in the direction of the spindle axis (S).

15. Adjustment drive (6) according to claim 14, **characterized in that** the housing (64) has the hollow body (95, 96).

16. Adjustment drive (6) according to one of the preceding claims, **characterized in that** the gear wheel (7) is connected non-rotatably to the spindle nut (66) or non-rotatably to the threaded spindle (62).

17. Adjustment drive (6) according to one of the preceding claims, **characterized in that** a predetermined breaking element is arranged between the threaded spindle (62) and the housing (64).

18. Steering column (1) comprising a first steering column component (31) and a second steering column component (33) which are adjustable relative to one another in the direction of a spindle axis (S), and having an adjustment drive (6) which has a housing (64) which can be attached to the first steering column component (31) via a connecting means (65) and can be supported in the direction of the spindle axis (S), and a threaded spindle (62) which is supported on the housing (64) in the direction of the spindle axis (S), can be attached to the second steering column component (33) and can be supported in the direction of the spindle axis (S),
**characterized in**
**that** the adjustment drive (6) is designed according to one of claims 1 to 17.

19. Steering column (1) according to claim 18, **characterized in that** the steering column components comprise at least three jacket tubes (31, 32, 33) which can be adjusted relative to one another in the direction of the steering column axis (L).

## Revendications

1. Entraînement de réglage (6) pour une colonne de direction (1) pour un véhicule automobile, comprenant un botier (64) qui peut être relié à la colonne de direction (1), dans lequel une roue d'engrenage (7) pouvant être entra née en rotation par un moteur (63) est montée dans un agencement de palier (72, 73) de manière à pouvoir tourner autour d'un axe de broche (S), sur lequel une broche filetée (62) s'engageant dans un écrou de broche (66) est supportée axialement dans la direction de l'axe de broche (S),
**caractérisé en ce que**
**en ce qu'**un dispositif d'absorption d'énergie (9) est disposé entre la broche filetée (62) et le boîtier (64), lequel est conçu pour absorber l'énergie cinétique lors d'un déplacement relatif de la broche filetée (62) par rapport au boîtier (64) dans la direction de l'axe de broche (S).

2. Entraînement de réglage (6) selon la revendication 1, **caractérisé en ce que** le dispositif d'absorption d'énergie (9) présente un élément d'absorption d'énergie (8, 92, 95, 96).

3. Entraînement de réglage (6) selon la revendication 1 ou 2, **caractérisé en ce que** le dispositif d'absorption d'énergie (9) coopère avec l'ensemble de palier (72) et le boîtier (64).

4. Entraînement de réglage (6) selon l'une des revendications précédentes, **caractérisé en ce que** le boîtier (64) est de forme tubulaire dans la direction de l'axe de la broche (S), l'ensemble de palier (72) étant logé coaxialement dans le boîtier (64).

5. Entraînement de réglage (6) selon l'une des revendications précédentes, **caractérisé en ce qu'**un élément de retenue (8) est disposé entre un élément de butée (77) de l'ensemble de palier (72) et le boîtier (64).

6. Entraînement de réglage (6) selon la revendication 5, **caractérisé en ce que** l'élément de retenue (8) présente un élément d'absorption d'énergie.

7. Entraînement de réglage (6) selon la revendication 5 ou 6, **caractérisé en ce que** l'élément de retenue (8) présente une section de contact (83) serrée contre le boîtier (64).

8. Entraînement de réglage (6) selon l'une des revendications 5 à 7, **caractérisé en ce que** l'élément de butée (77) comporte un poinçon de déformation coopérant avec l'élément de maintien (8) et présentant au moins une portion de déformation (771, 772).

9. Entraînement de réglage (6) selon la revendication 8, **caractérisé en ce que** l'élément de butée (77) présente un premier tronçon de déformation (771) et au moins un deuxième tronçon de déformation (772) espacé par rapport à celui-ci, le premier tronçon de déformation (771) et le deuxième tronçon de déformation (772) étant réalisés de telle sorte que l'élément de retenue (8), après une première déformation autour du premier tronçon de déformation (771), peut être déformé dans une deuxième déformation autour du deuxième tronçon de déformation (772).

10. Entraînement de réglage (6) selon la revendication 8 ou 9, **caractérisé en ce que** l'élément de retenue (8) présente une section de retenue (82) qui s'étend de manière inclinée contre l'élément de butée (77) depuis la première section de déformation (771) jusqu'à la section de contact (83), et la section de retenue (82) présente au moins une section partielle (84) qui peut être déformée autour de la deuxième section de déformation (772) contre l'élément de butée (77) afin de s'étendre de manière plus inclinée depuis la deuxième section de déformation (772) jusqu'à la section de contact (83).

11. Entraînement de réglage (6) selon l'une des revendications 8 à 10, **caractérisé en ce que** l'élément de retenue est réalisé sous la forme d'une bague de retenue (8), et l'élément de butée est réalisé sous la forme d'une bague de butée (77), les première et deuxième sections de déformation (771, 772) étant réalisées au moins par sections sous la forme d'arêtes de pliage (771, 772) s'étendant dans la direction périphérique et dirigées vers la bague de retenue (8).

12. Entraînement de réglage (6) selon l'une des revendications précédentes, **caractérisé en ce que** le boîtier (64) a une section transversale intérieure qui se rétrécit en direction de l'axe de broche (S) et/ou présente au moins une fente (91) qui s'étend en direction de l'axe de broche (S) et/ou présente une modification au moins partielle de l'épaisseur de paroi.

13. Entraînement de réglage (6) selon l'une des revendications précédentes, **caractérisé en ce que** le dispositif d'absorption d'énergie (9) présente au moins une patte de flexion et/ou de déchirure (92).

14. Entraînement de réglage (6) selon l'une des revendications précédentes, **caractérisé en ce que** le dispositif d'absorption d'énergie (9) présente un corps creux (95, 96) coaxial à l'axe de broche (S) et pouvant être comprimé plastiquement axialement dans la direction de l'axe de broche (S).

15. Entraînement de réglage (6) selon la revendication 14, **caractérisé en ce que** le boîtier (64) présente le corps creux (95, 96).

16. Entraînement de réglage (6) selon l'une des revendications précédentes, **caractérisé en ce que** la roue d'engrenage (7) est reliée solidairement en rotation à l'écrou de broche (66) ou solidairement en rotation à la broche filetée (62).

17. Entraînement de réglage (6) selon l'une des revendications précédentes, **caractérisé en ce qu'**un élément de rupture est disposé entre la tige filetée (62) et le boîtier (64).

18. Colonne de direction (1) comprenant un premier composant de colonne de direction (31) et un deuxième composant de colonne de direction (33), qui sont réglables l'un par rapport à l'autre dans la direction d'un axe de broche (S), et avec un entraînement de réglage (6), qui présente un boîtier (64), qui peut être monté sur le premier composant de colonne de direction (31) par l'intermédiaire d'un moyen de liaison (65) et qui peut être soutenu dans la direction de l'axe de broche (S), et une broche filetée (62) appuyée sur le boîtier (64) dans la direction de l'axe de broche (S), pouvant être montée sur le deuxième composant de colonne de direction (33) et pouvant être appuyée dans la direction de l'axe de broche (S),
**caractérisé en**
**ce que** l'actionneur de réglage (6) est réalisé selon l'une des revendications 1 à 17.

19. Colonne de direction (1) selon la revendication 18, **caractérisée en ce que** les composants de la colonne de direction comprennent au moins trois tubes d'enveloppe (31, 32, 33) réglables les uns par rapport aux autres dans la direction de l'axe de la colonne de direction (L).
